(19) Europäisches Patentamt / European Patent Office / Office européen des brevets

(11) **EP 3 114 938 B1**

(12) **EUROPEAN PATENT SPECIFICATION**

(45) Date of publication and mention
of the grant of the patent:
**05.05.2021 Bulletin 2021/18**

(51) Int Cl.:
***A23C 9/18*** *(2006.01)*

(21) Application number: **16001116.9**

(22) Date of filing: **19.01.2012**

(54) **METHOD FOR PRODUCING SOLID MILKS**

VERFAHREN ZUR HERSTELLUNG VON FESTSTOFFMILCH

PROCÉDÉ DE PRODUCTION DE LAITS SOLIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2011 FR 1150418**

(43) Date of publication of application:
**11.01.2017 Bulletin 2017/02**

(62) Document number(s) of the earlier application(s) in
accordance with Art. 76 EPC:
**12703609.3 / 2 665 364**

(73) Proprietor: **N.V. Nutricia
2712 HM Zoetermeer (NL)**

(72) Inventors:
• **Rastello-De Boisseson, Marie
45100 Orleans (FR)**
• **Bonneau, Eric
38460 Vernas (FR)**
• **Coenen, Gerardus Johannes
3584 CT Utrecht (NL)**

(74) Representative: **Nederlandsch Octrooibureau
P.O. Box 29720
2502 LS The Hague (NL)**

(56) References cited:
EP-A1- 1 048 216    EP-A1- 1 769 682
WO-A1-2007/077970    WO-A1-2010/073724
WO-A1-2011/158480    WO-A1-2016/032320
DE-A1- 2 433 650

• J. T. FELL ET AL: "Effect of particle size and
speed of compaction on density changes in
tablets of crystalline and spray-dried lactose",
JOURNAL OF PHARMACEUTICAL SCIENCES,
vol. 60, no. 12, 1 December 1971 (1971-12-01),
pages 1866-1869, XP055021193, ISSN: 0022-3549,
DOI: 10.1002/jps.2600601223
• DATABASE FSTA [Online] INTERNATIONAL
FOOD INFORMATION SERVICE (IFIS),
FRANKFURT-MAIN, DE; MCKENNA A B:
"Examination of whole milk powder by confocal
laser scanning microscopy.", XP002654508,
Database accession no. FS-1997-12-P-0164 &
JOURNAL OF DAIRY RESEARCH, vol. 64, no. 3,
1997, pages 423-432, NEW ZEALAND DAIRY RES.
INST. DOI: 10.1017/S0022029997002331
• SHIBATA ET AL: "2010 IDF Dairy Innovation
Awards, Best newcomer brand or business
award, Development of Production Technology
for Compressed Powdered Formula", MILK
SCIENCE, vol. 59, 1 January 2010 (2010-01-01),
XP055522302,

Remarks:
The file contains technical information submitted after
the application was filed and not included in this
specification

EP 3 114 938 B1

**Description**

Field of the invention

The present invention is in the field of nutrition and relates to a method for producing solid milks and to the products obtained with the aid of this method.

Background of the invention

In the food industry there is a constant search for increasing the convenience of food products. In particular liquid milk containing products need specific care in order to improve shelf life. Since a long time the milk products are produced in the form of a dry powder. Shelf life of dry products is much longer than the shelf life of the fresh milk product. Powders, however are not very convenient since a measuring device of some kind is needed to measure the right dose when dissolving the powder.

To solve the dosing problem, "solid milks" such as tablets, which are prepared by compacting or compressing milk powder, have been proposed to simplify the dosing. When making tablets from milk containing powders, several problems arise related to solubility and strength or hardness of the tablets. In general the harder the tablet the lower the solubility will be. In addition due to the pressure used for compacting a milk powder, agglomerated fat can be released resulting in an increased free fat content of the tablet. As is common knowledge, free fat has a negative impact on the shelf life of milk products, due to the increased sensitivity to oxidation of the free fat. Normally if the free fat content is higher than 4 wt% based on the dry weight of the product, this will lead to unacceptable oxidation of the free fat.

Solutions to the above problems have been proposed in WO 2007/077970, WO 2010/073724 and EP 1048216. These prior art documents disclose alternative methods for making tablets that comprise milk or milk derivatives.

When processing milk powders or milk containing powders into tablets, it is important that the capacity of the process is sufficiently high. E.g. when producing infant formula, a capacity of several tons of compacted infant formula per day should be feasible. If an average tablet weight is about 4-5 grams, 200,000 tablets represent about 1 ton compacted powder. E.g. A tabletting speed of 200 tablets per minute will result in a production time of about 17 hrs per ton powder. A high speed processes is therefore necessary.

International applications WO 2007/077970 and WO 2010/073724 describe a solid milk obtained by compression of a milk powder, moistening and then drying of the compressed powder. However, the method described in this application requires relatively long processing times. In fact, the rates of compression are less than or equal to 100 mm/s, the moistening times are between 5 s and 1 h, and the drying times are between 12 s and 2 h. All these processing times, which are the result of various technical constraints, do not make it possible to obtain a satisfactory production rate.

In addition, since the chance of microbial contamination should be as low as possible, the long moistening times and drying times are not preferred.

The purpose of the moistening step is to make a crust on the outer surface of the tablet. This improves the strength/hardness of the tablet without increasing the compaction pressure needed for compacting the powder. This is beneficial for the ultimate solubility of the tablet. However the WO 2007/077970 and WO 2010/073724 publications disclose methods for humidifying the tablet resulting in a film with a very limited thickness of one powder grain.

EP 1048216 discloses a different method wherein the powder is wetted and agglomerated before the compression step. This has several negative implications, including the fact that the powder will not be free flowable anymore, making it difficult to feed the die in the tabletting machine and in addition, it will be much more difficult to dry the compressed tablet since the interior of the tablet is still humid and will dry much slower resulting in an unacceptable risk of microbial growth.

WO2011/158480 discloses a solid compressed milk with favourable solubility and strength and the method of manufacturing the solid milk. The method for the manufacture of solid milk comprises compressed powdered milk to obtain compressed powdered milk, humidifying the compressed milk, drying the humidified compressed powdered milk. A part of amorphous lactose at the surface of the solid milk is crystallized at the steps of humidifying and drying. Milk Science, Vol. 59, No. 3, 2010, Shibata et. al, discloses the development of production technology for compressed powdered Formula by Meiji Dairies.

Summary of the invention

The present invention relates to a solid milk having a crust/core structure, wherein the crust is between 150 and 1000 μm thick, wherein the crust has a more dense structure than the core of the solid milk, wherein the solid milk is obtainable by a process comprising the steps:

- compressing milk powder at a compaction ratio between 50 % and 80 % and at a compaction pressure between 1 and 40 MPa, - moistening the solid unit by spraying an amount of water between 0.1 and 8 mg/cm2 surface area of the solid unit, then- drying the solid unit by applying short-wavelength infrared (IR) for a time between 1 to 20 s. The method for producing the solid milk is also claimed for.

It is further disclosed a method for producing milk products which do not possess the drawbacks mentioned above. The method for producing milk products according to the invention comprises the following steps:

- compressing the milk powder at a compression speed between 110 and 200 mm/s to obtain a solid unit,
- moistening the solid unit by spraying an amount of water between 0.1 and 8 mg/cm$^2$ surface area of the solid unit, then
- drying the solid unit.

It was surprisingly found that the method of the invention gives solid milk units, which can also be referred to as tablets, with a shell/crust structure with a thickness of at least 150 $\mu$m, i.e. preferably between about 0.15 and 1.0 mm, more preferably between 0.2 and 1.0 mm, having an excellent solubility and hardness.

The invention is as defined by the appended claims.

Detailed description of the invention

*Definitions*

Preferably "Milk powder" includes a powder selected from the group formed by skimmed milk powder, semi-skimmed milk powder, whole milk powder, modified milk powder and infant milk powder. Modified milk powder is preferably a milk powder containing substituted fat, such as vegetable fats, or a milk powder free from lactose or containing added sugars, such as fructose, sucrose, etc. Preferably the milk powder is infant milk powder with an average particle size between 30 and 700 $\mu$m, preferably between 100 and 500 $\mu$m, and free fat content between 0.5 and 4.0 wt% based on the total infant milk powder.

"Solid milk" means a compacted or compressed milk powder. These solid milks are generally provided in the form of tablets, pellets or pills. A solid combines the advantages of milk in powdered form with regard to storage period and stability with the advantages of the solid form, which can be handled easily and which may also be pre-dosed for the preparation of a given milky beverage.

"Compression speed" means the speed used for compressing the powder between the punch and die of the press. Another term is "punch velocity". This rate or velocity in the range between 110 - 200 mm/s.

"Shell or crust" structure of the solid milk is defined as follows. The words "crust" and "shell" as used in the patent are used interchangeably and mean the same. The shell is a layer that covers the outside of the solid milk consisting of the same material as the rest of the solid milk, but only in a more dense/compact structure. It can be formed by humidifying the outside of the solid milk. This will result in (partially)dissolving of the milk powder particles resulting in a more compact layer that becomes hard after drying thereby improving the hardness and tensile strength of the solid milk.

"Crust thickness" is determined according to the method of example 4 using a scanning electron microscope. Any other suitable microscopy method can be used to determine the thickness of the crust. Using the method according to the invention for preparing the solid milk units using water spraying nozzles, a dense shell thickness can be obtained over the total surface of the solid milk.

"Strength" or "hardness" of the solid milk as used in the patent description. Strength is calculated by the ratio 2F/S where F is the force applied diametrically in opposite senses to the solid milk until it breaks and S the area of the solid milk where the force is applied, i.e. the lateral area of the solid milk. The breaking force F (hardness) is converted into pressure so as to be independent of the contact surface to which the force was applied. For a cylindrical tablet, for example, the pressure at break (strength) in MPa is equal to twice the breaking force F in N divided by the involved crown surface area of the cylinder in mm$^2$.

The solid milk strength is expressed in MPa. The hardness is expressed in Newton (N). To measure the solid milk strength or hardness, a suitable tester such as the 8M DR. SCHLEUNIGER® of PHARMATRON® can be used.

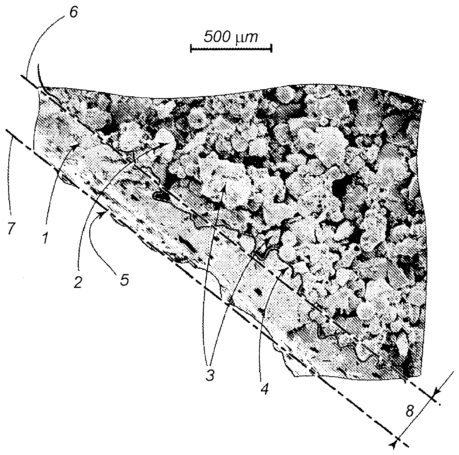

Description of the figure

The figure shows a drawing which reflects a photograph obtained with a scanning electron microscope of a cut of a part of a solid milk according to the invention, showing its crust (1) and its core (2) comprising particles (3); the interface between the crust and core (4); the outisde surface (5); the inside average limit line of the crust (6) and outside average limit line of the crust (7) and the average thickness of the crust (8).

In this context "Average thickness of the crust" means the average value of the local thickness of the crust (to be calculated from a representative number of measurements); "Local thickness of the crust in a point of its outside surface" means the distance between the said point of the outside surface of the crust and the interface between the crust and the core counted along a line substantially perpendicular to the outside surface of the crust; "Interface between the crust and the core" means the location where the structure of the solid milk is no longer mainly continuous to become mainly discontinuous. Such change continuous-discontinuous structure can be observed visually on a cut or an image of the cut of the solid milk using a scanning electron microscope. The location where the structure is no longer mainly continuous to become mainly discontinuous is a line or the medium line of a transition zone between a mainly continuous structure (crust) where the different milk particles or milk particle agglomerates cannot be visually clearly identified and a mainly discontinuous structure (core), where the different milk particles or milk particle agglomerates can be visually clearly identified. So, it is possible, on the image of a cut to draw two lines: an outside average limit line of the crust at the outside surface of the solid milk and an inside average limit line of the crust where the visible densification of the crust starts to fade, the distance between the two lines being the thickness of the crust.

*Method for preparing compressed milk powders.*

During the first step (compression step) the compression speed is preferably between 110 and 200 mm/s, more preferably between 125-200 mm/s and most preferably between 125-170 mm/s inclusive. (Throughout the present application, the ranges indicated will be considered to be inclusive of the limits of these ranges).

Compression is advantageously carried out at a compaction ratio between 50 % and 80 % and at a compaction pressure between 1 and 40 MPa.

"Compaction ratio" means a level calculated in accordance with the following formula:

$$\text{compaction ratio} = (\text{apparent density of the solid milk/true density of the milk powder})*100.$$

More specifically, if the milk powder is whole milk powder or infant milk powder, the compaction ratio is preferably selected within the range of 56 % to 62 % and the compaction pressure is between 1 and 8 MPa, preferably between 2 and 6 MPa, more preferably between 2 and 4 MPa.

By contrast, if the milk powder is skimmed or semi-skimmed milk powder, the compaction ratio is preferably selected in the range of 70 to 80 % and the compaction pressure is between 20 and 30 MPa.

These compaction ratios make it possible to obtain good solubility. By way of example, in the case of infant milk formula, this solubility is less than one minute and more preferably less than 30 s (see the solubility test detailed in Example 1).

In accordance with one embodiment, a rotary press is used to carry out the compression.

The compression step of method according to the invention is advantageously carried out without the addition of an additive, in particular a lubricant, and is not followed by a step of maintaining the compression pressure or volume, i.e. a holding time of about zero seconds. In fact, compacted products are prepared from powder by confining a specific mass of said powder in a specific compaction die and by applying a compaction stress to the powder which varies as a function of two characteristics: the pressure applied to the powder via the upper and lower punches and the walls of the die, and the volume of confinement defined by the walls surrounding the powder to be compacted, these two characteristics being linked. After compression and once the compaction ratio and the compression speed are significant, the compacted products undergo a process called "elastic recovery". In the case of compression, the elastic recovery of a powder characterises its ability to regain volume when the compressive stress ceases. Elastic recovery is generally expressed in the form of a percentage. It is obtained by dividing the difference between the thickness after elastic recovery and the thickness under stress by the thickness under pressure times 100. This process of elastic recovery may be limited and controlled by applying a step of maintaining the pressure or volume of compression for a certain time, i.e. holding time. The introduction of a step of maintaining pressure is favoured in the international application cited above and is not advantageous for the production capacity of the process. It has been demonstrated by the inventors that, with regard to the milk powder, not only was the elastic recovery relatively limited, but these steps of maintaining pressure or volume also had a detrimental effect on the dissolution time of the solid milks. Consequently, these steps of maintaining pressure or volume could advantageously be as low as technically possible, preferably be less than 100 ms, preferably between 0 and 100 ms, more preferably between 0 and 50 ms and even more preferably omitted, i.e. about 0 milli second (see Example 2).

At the end of the compression step a solid unit of compressed powder is obtained. However, this unit does not always exhibit sufficient hardness to be packaged, commercialised and ultimately handled by the consumer. The inventors have demonstrated that a compression speed between 110 and 200 mm/s makes it possible to obtain a solid which is sufficiently cohesive to withstand the following steps of the method without degradation, whilst working at increased production rates of approximately at least 750 solids/minute and preferably at least 1000 to 1500 solids/minute.

The second step is a moistening step. This second step of the method is preferably carried out by spraying controlled amounts of water homogeneously over all the faces of the solid milk. The amount of water sprayed is preferably 0.1 to 8 mg/cm$^2$, more preferably 0.5 to 5 mg/cm$^2$, even more preferably 0.7 to 2.5 mg/cm$^2$.

The second step of the method according to the invention aims to moisten the solid unit. This step of the present invention improves the hardness of the solid and the friability of the solid while at the same time keeping the solubility of the solid within the required ranges. The amount of water should be enough to penetrate into the surface until a depth of at least 2 times the average diameter of the powder particles in order to solubilise over the surface the soluble active agents so as to create, after drying, bridges on the surface which make it possible to increase the hardness of the solid milk. However, the moistening time must be as short as possible so as to limit the solubilisation of the soluble active agents and to limit the drying time. This time must also be short so as to reduce the risks of development of bacteria. The spraying of water over the solid unit makes it possible to limit and control the amount of water perfectly, to distribute it homogeneously and to facilitate the drying step.

The time of moistening by spraying is advantageously between 50 and 500 ms depending on the production rates used, ad preferably between 100 and 300 ms. The water added must be located solely on the surface of the solid milk without penetrating the solid milk so as to form, after drying, a thin protective crust with a thickness of between 0.15 and 1.0 mm, whilst keeping the dissolution properties of the end solid milk within the required ranges.

The water may be sprayed at a temperature less than 25°C, preferably between 1 and 25°C, more preferably between 5 and 25 °C, most preferably between 5 and 15 °C, but also between 75 and 95 °C, preferably between 80 and 90 °C so as to reduce the risks of development of microbial growth. A device comprising at least two atomisers is advantageously used to spray the amount of water required per solid milk.

The third step of the method aims to dry the moistened solid unit so as to restore the initial level of moisture of the solid unit before moistening, and more specifically the level of moisture of the initial milk product. More specifically, the drying step makes it possible to restore the initial level of moisture of the milk powder with an accuracy of more or less 0.2 %, preferably 0.1 %, more preferably 0.05 %. In fact, the moisture of the milk powder is between 1 and 5 % and in particular between 1 and 3 %. During the first step of the method according to the invention, the moisture of the solid unit is also between 1 and 5 %. During the second step of the method according to the invention the percentage of water increases at the surface of the unit but remains identical in the core of the solid unit. Consequently, the third step of the method according to the invention must be carried out immediately after the second step of the method and within a minimal period of time so as to prevent the penetration of the water, sprayed over the surface of the solid, towards the core of the solid.

As indicated above, the use of spraying to carry out the moistening step makes it possible to implement very short drying times. The drying time is advantageously between 1 and 20 s, preferably between 1 and 11 s, more preferably between 3 and 11 s.

The third step (drying step) is carried out by infrared (IR), preferably with the aid of an infrared tunnel. IRs which emit short wavelengths are used so as to avoid the Maillard reaction over the surface of the solids. This is very important for improved shelf life, taste and colour of the solid milks.

The use of IR is permitted thanks to the implementation of spraying of water during the second step, which makes it possible to dispense a limited amount of water distributed homogeneously. In fact, the IR basically dries to a shallow depth. All the water added at the surface during the second step is thus eliminated within a very short drying time, the initial weight of the solid before moistening is restored and a thin, tough crust is formed.

The solid milks according to the invention are particularly advantageous since they have a structure of the shell type with a superficial shell or crust thickness between 150 μm and 1000 μm, preferably between 150 and 750 μm and most preferably between 200 and 500 μm. This provides them with substantial strength so they can be handled and transported whilst exhibiting rapid dissolution of less than 1 minute and preferably of less than 30 s.

Thanks to the method according to the invention, solid milks which exhibit good strength are obtained.

This strength is quantified in particular with the aid of the measurement of the hardness of the solid milk, which corresponds to the force applied diametrically until the solid breaks. For a cylindrical solid milk with a diameter of 25 mm, this is between 10 and 300 N, preferably between 20 and 200 N, and even more preferably between 30 and 200 N. A hardness tester of the 8M DR. SCHLEUNIGER type is used to take these measurements of hardness. The breaking force F is converted into pressure so as to be independent of the contact surface to which the force was applied. For a cylindrical tablet, for example, the pressure at break in MPa is equal to twice the breaking force F in N divided by the involved crown surface area of the cylinder in mm$^2$. The pressure at break is between 0.01 and 0.6 MPa, preferably between 0.01 and 0.15 MPa and preferably between 0.02 and 0.09 MPa and more preferably between 0.03 and 0.06 MPa.

Another parameter which makes it possible to quantify the strength is the measurement of friability. Friability measures the loss of powder of the solid milks after having been dropped in accordance with predetermined conditions. The friability of the solid milks according to the invention may be measured with the aid of a friabilimeter of the SOTAX F2 type equipped with a friability drum. Five solid milks are placed in the drum, which rotates at a speed of 20 rpm for 30 s (that is to say 10 revolutions). The solids are weighed before the test and after the test. Before being weighted the solids are being dedusted with a brush. The % friability is calculated in accordance with the following formula:

$$\% \text{ friability} = (\text{initial mass of the solids} - \text{mass of the solids after the test})/\text{initial}$$

$$\text{mass of the solids x } 100.$$

The solid milks must not be broken at the end of the test.

The solid milks according to the invention advantageously have a % friability of less than 10%. The friability of the solid milks is not improved, or is only improved slightly if the second and third steps are carried out over long periods as disclosed in the prior art, e.g. longer than 1 s. In fact, over a longer processing time, the water added to the surface has time to penetrate to the core of the solid and its effect is thus "diluted". The effect of localised hardening at the surface of the solid is thus reduced, or even cancelled out. Furthermore, the result is a significant increase in the dissolution time, whereas the hardness of the solid is not increased satisfactorily (see Example 3).

The method according to the invention may also include a fourth step, aimed at cooling the milk product to a temperature below 30 °C, possibly followed by a step aimed at packaging the solid milk in a moisture-tight packaging under inert gas. This fall in temperature of the fourth step makes it possible to avoid any condensation inside the packaging. The moisture-tight packaging under inert gas is important so as to prevent any uptake of moisture of the solid milk, which would have a detrimental effect on the dissolution behaviour and could lead to the development of bacteria.

So as to avoid sticking, which would be inconvenient, the method is carried out in an atmosphere having a level of relative humidity of the ambient air of less than 50 %, preferably between 30 and 45 %, for a temperature between 15 and 25 °C at ambient pressure.

The combination of the different steps of the method according to the invention makes it possible to obtain production rates of at least 750 solids per minute, preferably between 750 and 2000, more preferably between 1000 to 2000 solids per minute.

The invention also relates to solid milks obtainable by the method according to the invention. Thanks to their thin surface crust, these solids are very resistant and at the same time exhibit good dissolution.

More specifically, these solids have a core/shell structure in which the shell or crust is between 0.15 mm and 1.0 mm thick and is preferably between 0.15 and 0.75 mm, even more preferably between 0.20 and 0.50 mm. They have a hardness, measured by pressure at break between 0.01 and 0,6, 0.55, 0.45, 0.35, 0.25, 0.15, 0.05 MPa and preferably between 0.02 and 0.15, more preferably between 0.03 and 0.15 MPa and more preferably between 0.04 and 0.15 MPa whilst exhibiting a dissolution time in an aqueous medium at a temperature between 20 and 100 °C of less than or equal to a minute, preferably less than 30 s. The measurement of the dissolution time by conductimetry is more specifically provided in Example 2. Lastly, they advantageously have a % friability of less than 10 %.

Further disclosed are (not part of the claimed invention):

1. A solid milk having a crust, wherein the crust is between 150 $\mu$m and 1000 $\mu$m thick.
2. The solid milk according to embodiment 1, having a hardness between 10 and 300 N, preferably between 30 and 200 N.
3. The solid milk according to embodiment 1 or 2, having an impact strength expressed in stress between 0.01 and 0.15 MPa and having a dissolution time in an aqueous medium, at a temperature between 20 and 100 °C, of less than or equal to one minute.
4. The solid milk according to any of embodiments 1 to 3, having a % friability less than 10 %.
5. A method for producing a solid milk according to any of the embodiments 1 to 4 comprising the following steps:

   - compressing milk powder at a compression speed between 110 and 200 mm/s to obtain a solid unit,
   - moistening the solid unit by spraying an amount of water between 0.1 and 8 mg/cm² surface area of the solid unit, then
   - drying the solid unit.

6. The method according to embodiment 5, wherein the compression step is carried out without the addition of a lubricant and is not followed by a step of maintaining the compression pressure.
7. The method according to embodiment 5 or 6, wherein the time of the moistening step is between 0.050 and 0.500 seconds.
8. The method according to any one of embodiments 5 to 7, wherein the drying step makes it possible to restore the initial level of moisture of the milk powder with an accuracy of more or less 0.2 %.
9. The method according to any one of embodiments 5 to 8, wherein the time of the drying step is between 1 and 20 s.

10. The method according to any one of embodiments 5 to 9, wherein the drying step is carried out by infrared.

11. The method according to any one of embodiments 5 to 10, wherein the compaction ratio is between 50 % and 80 %.

12. The method according to any one of embodiments 5 to 11, wherein the compression step is carried out at a compaction pressure between 1 and 40 MPa.

13. The method according to any one of embodiments 5 to 12, wherein the level of relative moisture of the ambient air is less than 50 %.

14. The method according to any one of embodiments 5 to 13, wherein the production rate is 750 to 2000 solids per minute.

The invention will be better understood upon reading the following examples, which are given purely by way of example.

Example 1: Milk product from milk powder

Tests 1 to 4: The infant milk powder has the following features:

- a density of 0.46, that is to say a mass density of 0.46 g.cm$^{-3}$,
- an average particle size between 100 and 400 $\mu$m, and
- a level of moisture of 2.1 %.

Method: 4.5 g of milk powder are placed in a cylindrical die having a diameter of 25 mm. The milk powder is compacted at a compression speed of 125 mm/s until a compaction ratio of 58 % is achieved.

Once removed from the die of the press, the solid milk passes over the grid of a conveyor. It passes between 4 atomisers so as to receive, homogeneously, a quantity of sprayed water. The amount of sprayed water per solid milk depends on the speed of the conveyor. The speed of the conveyor is controlled so as to ensure an output of 1100 solids/min. The moistening time does not exceed 300 ms. The humidified solid milk passes immediately into an infrared tunnel equipped with four 2 KW IR lamps which enable homogeneous drying over all faces of the solid. The drying time until the initial moisture level of the solid before moistening is restored is between 5 and 12 s.

Once the temperature of the solid milk has returned to a temperature below 30 °C, the hardness of the solid milk is measured using the DR. SCHLEUNIGER hardness tester.

The table below collates the results obtained for different amounts of sprayed water per unit of surface area of the solid milk.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 1 | 125 | 58 | < 10 | 0.77 | 5 | 28 |
| 2 | 125 | 58 | < 10 | 0.93 | 5 | 40 |
| 3 | 125 | 58 | < 10 | 1.29 | 5 | 50 |
| 4 | 125 | 58 | < 10 | 1.70 | 12 | 89 |

Dissolution tests, carried out in a baby bottle, of the produced solid milks:
Dissolution was assessed by placing 6 solid milks in a baby bottle with 180 mL of water at 40 °C and by shaking for 30 s. After 30 s of manual shaking the content of the baby bottle was poured into a sieve of which the meshes measured 630 $\mu$m. The presence of lumps was observed visually. The estimation of the dissolution score was determined by a visual assessment, basically taking into account the size of the remaining lumps. In the absence of lumps, the dissolution score was 0. With the presence of lumps, a dissolution score from 1 to 10 was awarded depending on the size of the lumps observed on the sieve. The score 10 corresponds to the fact that almost all the solid milks are retained on the sieve. The larger the lumps and the closer they are to the initial size of the solid, the higher the score. Dissolution is acceptable if the dissolution score is less than or equal to 2.

The solid milks obtained in accordance with tests 1 to 4 all have a dissolution score of 1, which is advantageous for the desired application.

Test 5: The infant milk powder has a different composition compared to that of the powder used in tests 1 to 4:
- a density of 0.51, that is to say a mass density of 0.51 g.cm$^{-3}$,
- an average particle size between 100 and 400 $\mu$m, and

- a level of moisture of 3 %.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 5 | 125 | 62 | < 10 | 1.50 | 11 | 50 |

The dissolution score of these solid milks is 1.

Test 6: The infant milk powder has a different composition compared to that of the powder used in tests 1 to 4:
- a density of 0.43, that is to say a mass density of 0.43 g.cm$^{-3}$,
- an average particle size between 100 and 400 $\mu$m, and
- a level of moisture of 2.9 %.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 6 | 125 | 56 | < 10 | 1.29 | 12 | 50 |

The dissolution score of these solid milks is 1.

Test 7: The whole milk powder has the following features:
- a density of 0.38, that is to say a mass density of 0.38 g.cm$^{-3}$,
- an average particle size between 100 and 400 $\mu$m, and
- a level of moisture of 3.7 %.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 7 | 200 | 59 | < 10 | 1.0 | 6 | 44 |

Test 8: The semi-skimmed milk powder has the following features:
- a density of 0.39, that is to say a mass density of 0.39 g.cm$^{-3}$,
- an average particle size between 100 and 400 $\mu$m, and
- a level of moisture of 4.1 %.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 8 | 125 | 75 | < 10 | 1.1 | 6 | 50 |

Example 2: Influence of the holding time

Measurement of the dissolution time:

Two tablets are placed in a beaker containing 200 mL of water at 40 °C. The content of the beaker is gently stirred using a magnetic stirrer and is kept at 40 °C during the analysis. An electrode which is immersed in the beaker measures conductivity every 3 seconds. The curve of conductivity over time is converted into percentage of the solid dissolved over time, with the maximum value of conductivity achieved being taken as 100 % of the dissolved solid. Values corresponding to 50 % of the dissolved solid and 90 % of the dissolved solid were obtained.

The infant milk powder has the following features:

-    a density of 0.46, that is to say a mass density of 0.46 g.cm$^{-3}$,
-    an average particle size between 100 and 400 $\mu$m, and
-    a level of moisture of 2.1 %.

Method: 4.5 g of milk powder are placed in a cylindrical die having a diameter of 25 mm. The milk powder is compacted at compression speed of 125 mm/s or 200 mm/s until compaction ratio of 61 or 64 % is achieved. For tests B and D, once the compaction ratio had been achieved it was maintained at constant volume for 300 ms and then pressure is reduced to remove the solid milk.

| Test N° | Compression speed (mm/s) | Holding duration (ms) | Compaction ratio (%) | Duration to reach 50 % of the dissolved solid milk (s) | Duration to reach 90 % of the dissolved solid milk (s) |
|---|---|---|---|---|---|
| A | 125 | 0 | 61 | 35 | 50 |
| B | 125 | 300 | 61 | 42 | 94 |
| C | 200 | 0 | 64 | 46 | 87 |
| D | 200 | 300 | 64 | 92 | 166 |

Conclusion:

These tests demonstrate a significant increase in the time required to reach 50 % and 90 % of the dissolved solid when a holding time combined with a compression speed between 110 and 200 mm/s is applied.

Example 3 (illustrative): Influence of the steps of moistening and drying

The infant milk powder has the following features:

- a density of 0.46, that is to say a mass density of 0.46 g.cm$^{-3}$,
- an average particle size between 100 and 400 $\mu$m, and
- a level of moisture of 2.1 %.

Method: 4.5 g of milk powder are placed in a cylindrical die having a diameter of 25 mm. The milk powder is compacted at compression speed of 125 mm/s until a compaction ratio of 58 % is achieved. The following tests were carried out using moistening and drying technologies making it possible to vary the moistening and drying times.

| Test N° | Compaction ratio(%) | Moistening conditions | Moistening duration (s) | Amount of water per unit of surface area (mg/cm$^2$) | Drying temp. °C | Drying duration (s) | Hardness after drying (N) |
|---|---|---|---|---|---|---|---|
| E | 58 | 75 °C, 85 % RH | 6 | 1.46 | 80 °C | 65 | 14 |
| F | 58 | 75 °C, 85 % RH | 6 | 1.46 | 80 °C | 45 | 17 |

It is clear that solid milks of low hardness, more specifically less than 20 N are obtained.

The following tests were carried out using rapid moistening by spraying, and slow drying by hot air:

| Test N° | Compaction ratio(%) | Moistening conditions | Moistening duration (s) | Amount of water per unit of surface area (mg/cm$^2$) | Drying temp. °C | Drying duration (s) | Hardness after drying (N) |
|---|---|---|---|---|---|---|---|
| G | 62 | spraying | 500 | 2.52 | 60 °C | 27 | 15 |
| H | 62 | spraying | 500 | 2.52 | 60 °C | 31 | 11 |

The hardness of the solid milk does not increase sufficiently with rapid moistening by spraying and a slow drying time of approximately 30 min. Moreover, the formation of the surface crust is probably thicker since the dissolution of the solids deteriorates rapidly although hardness is low, more specifically less than 20 N.

In accordance with the test in a baby bottle with water at 40 °C and shaking for 30 s, the dissolution score is respectively:

- for Example G: 7, which means that large lumps are recovered on the sieve with meshes of 630 $\mu$m,
- for Example H: 10, which means that almost all the solids are recovered on the screen with meshes of 630 $\mu$m.

Conclusion:

The hardness of the solid milks is not improved, or is only slightly improved if the steps of moistening and drying are carried out over long periods greater than 1 s and 30 s respectively. Furthermore, the result is a significant increase in the dissolution time, whereas the hardness of the solid is not increased satisfactorily.

Example 4. Method for making SEM pictures and measure solid milk crust thickness.

Apparatus
Knife or scalpel
Tweezers
SEM stubs
Carbon stickers
Ruler
JEOL JFC-1200 fine coater (for gold coating samples)
JEOL JSM-5610 Scanning Electron Microscope
A graphical software program or SEM software for sizing crust thickness

*Procedure*

- Obtain a solid milk and carefully break it. A knife and scalpel are not suitable to obtain a suitable crust intersection image.
- Cut away excessive solid milk material to fit the carbon sticker.
- Take a SEM stub and stick a carbon sticker on it.
- Take the prepared solid milk part and stick it to the carbon sticker on the stub, orientating the intersection upwards (away from the sticker).
- Take the prepared stub with the solid milk part and use the fine coater to apply an appropriate gold layer according to the manufacturer's instructions.
- Transfer the gold coated tablet sample to the SEM, and start the imaging procedure according to manufacturer's instructions.
- Obtain an image with the desired magnification, and make sure the correct scale indicator for the set magnification is in the picture.
- Use the SEM software or another imaging software package to draw two lines in the obtained tablet picture. One line through the solid milk surface and another line parallel to the surface line. This second line should be drawn where the visible densification of the crust starts to fade. In this way an average distance between begin and end of the crust is obtained.
- Use the sizing tool of the SEM software or another software sizing tool to determine the distance between the two lines.

*Result*

The measured average crust thickness is measured from a solid milk made from a powder with moisture level of 3.1wt%. In this example this procedure results in an average crust thickness of about 330 micrometers and a solid milk hardness of about 100N. This shows that the method according to the inventoin can result in solid milks with a crust thickness between 150 and 1000$\mu$m.

**Claims**

1.  A solid milk having ; a core/crust structure
    wherein the crust is between 150 $\mu$m and 1000 $\mu$m thick,
    wherein the crust has a more dense structure than the core of the solid milk, wherein the solid milk is obtainable by a process comprising the steps:

- compressing milk powder at a compaction ratio between 50 % and 80 % and at a compaction pressure between 1 and 40 MPa,
- moistening the solid unit by spraying an amount of water between 0.1 and 8 mg/cm2 surface area of the solid unit, thendrying the solid unit by applying short-wavelength infrared (IR) for a time between 1 to 20 s.

2. The solid milk according to claim 1, having a hardness between 10 and 300 N, preferably between 30 and 200 N.

3. The solid milk according to claim 1 or 2, having an impact strength expressed in stress between 0.01 and 0.6 MPa.

4. The solid milk according to any of claims 1 to 3, having a dissolution time in an aqueous medium, at a temperature between 20 and 100 °C, of less than or equal to one minute.

5. The solid milk according to any of claims 1 to 4, having a % friability of less than 10 %.

6. The solid milk according to any of claims 1 to 5, wherein the crust consists of the same material as the rest of the solid milk.

7. The solid milk according to any of claims 1 to 6, wherein the crust is a mainly continuous structure ; where the different milk particles or milk particle agglomerates cannot be visually clearly identified and the core is a mainly discontinuous structure, where the different milk particles or milk particle agglomerates can be visually clearly identified.

8. The solid milk according to any of claims 1 to 7, being compressed milk powder in the form of a tablet, pellet of pill.

9. The solid milk according to any of claims 1 to 8, being compressed skimmed milk powder, semi-skimmed milk powder, whole milk powder, modified milk powder or infant milk powder.

10. The solid milk according to any of claims 1 to 9, wherein:

- the time of the moistening step is between 0.050 and 0.500 seconds.

11. The solid milk according to any of the claims 1 to 10, wherein the drying step makes it possible to restore the initial level of moisture of the milk powder with an accuracy of more or less 0.2 %.

12. A method for producing a solid milk according to claims 1-11 comprising the following steps:

- compressing milk powder at a compaction ratio between 50 % and 80 % and at a compaction pressure between 1 and 40 MPa,
- moistening the solid unit by spraying an amount of water between 0.1 and 8 mg/cm$^2$ surface area of the solid unit, then
- drying the solid unit by applying short-wavelength infrared (IR) for a time between 1 - 20 s.

13. The method according to claim 12, wherein the compression speed is between 110 and 200 mm/s.

**Patentansprüche**

1. Festmilch, die einer Kern-/Krustenstruktur hast, wobei die Kruste zwischen 150 $\mu$m und 1000 $\mu$m dick ist, wobei die Kruste eine dichtere Struktur aufweist als der Kern der Festmilch, wobei die Festmilch durch ein Verfahren zu erlangen ist, das die folgenden Schritte umfasst:

- Komprimieren von Milchpulver mit einem Verdichtungsverhältnis zwischen 50% und 80% und bei einem Verdichtungsdruck zwischen 1 und 40 MPa,
- Befeuchten der Feststoffeinheit durch Sprühen einer Wassermenge zwischen 0,1 und 8 mg/cm$^2$ Grundfläche der Feststoffeinheit, anschließend
- Trocknen der Feststoffeinheit durch Anwendung von kurzwelligem Infrarot (IR) für zwischen 1 bis 20 s.

**2.** Festmilch nach Anspruch 1, die eine Härte zwischen 10 und 300 N, vorzugsweise zwischen 30 und 200 N aufweist.

**3.** Festmilch nach Anspruch 1 oder 2, die eine in mechanischer Spannung ausgedrückte Schlagfestigkeit zwischen 0,01 und 0,6 MPa aufweist.

**4.** Festmilch nach einem der Ansprüche 1 bis 3, die eine Lösungszeit in einem wässrigen Medium, bei einer Temperatur zwischen 20 und 100 °C, von kleiner oder gleich einer Minute aufweist.

**5.** Festmilch nach einem der Ansprüche 1 bis 4, die eine prozentuale Bröckeligkeit von weniger als 10 % aufweist.

**6.** Festmilch nach einem der Ansprüche 1 bis 5, wobei die Kruste aus dem gleichen Material wie der Rest der Festmilch besteht.

**7.** Festmilch nach einem der Ansprüche 1 bis 6, wobei die Kruste eine hauptsächlich regelmäßige Struktur ist, bei der die unterschiedlichen Milchpartikel oder Milchpartikelagglomerate visuell nicht deutlich identifiziert werden können, und der Kern eine hauptsächlich unregelmäßige Struktur ist, bei der die unterschiedlichen Milchpartikel oder Milchpartikelagglomerate visuell deutlich identifiziert werden können.

**8.** Festmilch nach einem der Ansprüche 1 bis 7, die ein verpresstes Milchpulver in Form einer Tablette, eines Pellets oder einer Pille ist.

**9.** Festmilch nach einem der Ansprüche 1 bis 8, die ein verpresstes Magermilchpulver, teilentrahmtes Milchpulver, Vollmilchpulver, modifiziertes Milchpulver oder Babymilchpulver ist.

**10.** Festmilch nach einem der Ansprüche 1 bis 9, wobei die Zeit des Befeuchtungsschrittes zwischen 0,050 und 0,500 Sekunden liegt.

**11.** Festmilch nach einem der Ansprüche 1 bis 10, wobei der Trocknungsschritt es ermöglicht, den anfänglichen Feuchtigkeitsgrad des Milchpulvers mit einer Genauigkeit von mehr als 0,2 % wiederherzustellen.

**12.** Verfahren zur Herstellung von Festmilch nach den Ansprüchen 1 bis 11, das die folgenden Schritte umfasst:

- Komprimieren von Milchpulver mit einem Verdichtungsverhältnis zwischen 50% und 80% und bei einem Verdichtungsdruck zwischen 1 und 40 MPa,
- Befeuchten der Feststoffeinheit durch Sprühen einer Wassermenge zwischen 0,1 und 8 mg/cm$^2$ Grundfläche der Feststoffeinheit, anschließend
- Trocknen der Feststoffeinheit durch Anwendung von kurzwelligem Infrarot (IR) für zwischen 1 bis 20 s.

**13.** Verfahren nach Anspruch 12, wobei die Verpressungsgeschwindigkeit zwischen 110 und 200 mm/s liegt.

**Revendications**

**1.** Lait solide ayant une structure de cœur/croûte, dans lequel la croûte a une épaisseur comprise entre 150 $\mu$m et 1000 $\mu$m, dans lequel la croûte a une structure plus dense que le cœur du lait solide, dans lequel le lait solide peut être obtenu par un procédé comprenant les étapes consistant à :

- comprimer de la poudre de lait à un taux de compactage compris entre 50 % et 80 % et à une pression de compactage comprise entre 1 et 40 MPa,
- humidifier l'unité solide en pulvérisant une quantité d'eau comprise entre 0,1 et 8 mg/cm$^2$ de surface de l'unité solide, puis
- sécher l'unité solide en appliquant des infrarouges (IR) à courte longueur d'onde pendant une durée comprise entre 1 et 20 s.

**2.** Lait solide selon la revendication 1, ayant une dureté comprise entre 10 et 300 N, de préférence entre 30 et 200 N.

**3.** Lait solide selon la revendication 1 ou 2, ayant une résistance aux chocs exprimée en contrainte comprise entre 0,01 et 0,6 MPa.

**4.** Lait solide selon l'une quelconque des revendications 1 à 3, ayant un temps de dissolution en milieu aqueux, à une température comprise entre 20 et 100°C, inférieur ou égal à une minute.

**5.** Lait solide selon l'une quelconque des revendications 1 à 4, ayant un % de friabilité inférieur à 10 %.

**6.** Lait solide selon l'une quelconque des revendications 1 à 5, dans lequel la croûte est constituée du même matériau que le reste du lait solide.

**7.** Lait solide selon l'une quelconque des revendications 1 à 6, dans lequel la croûte est une structure principalement continue où les différentes particules de lait ou différents agglomérats de particules de lait ne peuvent pas être identifié(e)s visuellement clairement et le cœur est une structure principalement discontinue, où les différentes particules de lait ou différents agglomérats de particules de lait peuvent être identifié(e)s visuellement clairement.

**8.** Lait solide selon l'une quelconque des revendications 1 à 7, étant de la poudre de lait comprimée sous forme de comprimé, de pastille ou de pilule.

**9.** Lait solide selon l'une quelconque des revendications 1 à 8, étant de la poudre de lait écrémé comprimée, de la poudre de lait demi-écrémé, de la poudre de lait entier, de la poudre de lait modifié ou de la poudre de lait infantile.

**10.** Lait solide selon l'une quelconque des revendications 1 à 9, dans lequel la durée de l'étape d'humidification est comprise entre 0,050 et 0,500 seconde.

**11.** Lait solide selon l'une quelconque des revendications 1 à 10, dans lequel l'étape de séchage permet de restaurer le niveau initial d'humidité de la poudre de lait avec une précision de plus ou moins 0,2 %.

**12.** Procédé de production d'un lait solide selon les revendications 1 à 11, comprenant les étapes suivantes consistant à :

- comprimer de la poudre de lait à un taux de compactage compris entre 50 % et 80 % et à une pression de compactage comprise entre 1 et 40 MPa,
- humidifier l'unité solide en pulvérisant une quantité d'eau comprise entre 0,1 et 8 mg/cm$^2$ de surface de l'unité solide, puis
- sécher l'unité solide en appliquant des infrarouges (IR) à courte longueur d'onde pendant une durée comprise entre 1 et 20 s.

**13.** Procédé selon la revendication 12, dans laquelle la vitesse de compression est comprise entre 110 et 200 mm/s.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007077970 A
- WO 2010073724 A
- EP 1048216 A
- WO 2011158480 A

**Non-patent literature cited in the description**

- **SHIBATA.** *Milk Science,* 2010, vol. 59 (3